# EUROPEAN PATENT APPLICATION

(11) **EP 1 870 601 A1**
(43) Date of publication of application: **26.12.2007**
(21) Application number: 06743409.2
(22) Date of filing: 22.03.2006
(51) Int. Cl.: F16B 12/52, A47B 47/00

(54) **TABLE, SHELVING UNIT OR MODULAR STRUCTURE COMPRISING HOLLOW SECTIONS WITH A SQUARE CROSS-SECTION, WHICH ARE MOUNTED BY MEANS OF COUPLING WITH SAFETY RETAINERS**

(30) Priority: 05.04.2005 ES 200500781
(71) Applicant: Gonzalez Llorens, Rafael, 08303 Mataró (Barcelona) (ES); Munoz Godoy, David, 08303 Mataró (Barcelona) (ES)
(72) Inventor: Gonzalez Llorens, Rafael, 08303 Mataró (Barcelona) (ES); Munoz Godoy, David, 08303 Mataró (Barcelona) (ES)
(74) Representative: Isern-Jara, Nuria
(86) International application number: PCT/ES2006/000140
(87) International publication number: WO 2006/106161

(57) **Abstract**

The invention relates to a table, shelving unit or modular structure comprising hollow sections with a square cross-section, which are mounted by means of coupling with safety retainers. The invention consists of upper longitudinal members (1) and intermediate longitudinal members (7) comprising hollow sections with a square cross-section, which are coupled to vertical structural elements (12) by means of longitudinal and transverse grooves, said assembly being secured with safety retainers (11).

## Description

### OBJECT OF THE INVENTION

This invention refers to a table, shelf unit or modular structure with box hollow profile sections, assembled by using safety coupling retainers, based on a coupling procedure of multiple structural elements, such as feet, upper and intermediate longitudinal members, that make up the table, shelf unit or modular structure with grooves made in the ends of same, which are fixed by means of grooves made in the ends of same, that incorporate some expansion feet, in each one of the union nodes of said elements, preventing these from accidentally becoming unattached, at the same time these elements being used for the support of glass or any other flat surface making the upper surface or table top, at the height of the upper longitudinal members, and an intermediate support surface at the height of the intermediate longitudinal members.

### FIELD OF THE INVENTION

The object of the invention has its application in the field of industry related to furniture, in those cases in which a resistant table, shelf unit or modular structure is required, with a markedly aesthetic appearance, fast and simple assembly and dismantling, in addition to having a low cost, with the object of dispensing with specialised personnel for the assembly, likewise numerous and complex external fixing elements for the structural elements.

### BACKGROUND TO THE INVENTION

At the present time there are multiple types of modular tables, shelf units or structures, which are generally made up of vertical structural elements, horizontal structural elements or longitudinal members, and at least a flat or board surface, for the purpose of being used as a support surface for objects, in order to fulfil the main function of same, said elements being fixed to each other either by means of sticking or gluing, or equally by welding procedures, in the case of metallic elements, even by means of the arrangement of numerous external fixing elements, such as screws, for the fixing of the vertical structural elements and the table, shelf or modular structure longitudinal members.

There are numerous disadvantages of these types of tables, shelf units or modular structures, such as the need to be assembled entirely in the factory, requiring specialised personnel and equipment for the production, which increase the cost of same, not allowing the dismantling of the table, shelf unit or modular structure without the destruction of same.

On the other hand there are tables, shelf units or modular structures that are comprised of hollow section material that have a series of grooves in their structural elements that allow simple and fast assembly and dismantling of the tables, shelf units or modular structures, but without the availability of any external security element for the fixing of the vertical structural elements to the longitudinal members thus having a significant safety problem given the disadvantage that the tables, shelf units or modular structures is kept assembled and therefore the profiles joined to each other are held together by the effects of gravity, this being that it is under the situation of holding the static position of the tables, shelf units or modular structures bringing about the accidental release of the elements of the tables, shelf units or modular structures themselves when any involuntary upward action is made against any of the longitudinal members of the tables, shelf units or modular structures or alternatively simply by moving same and supporting them by the longitudinal members.

### DESCRIPTION OF THE INVENTION

The tables, shelf units or modular structures with hollow box section profiles assembled by coupling with safety retainers that the invention proposes constitutes an improvement for the tables, shelf units or modular structures, and resolves the problem stated above fully and in a satisfactory manner, in line with preventing the accidental undoing of the hollow grooved sections, that make up the tables, shelf units or modular structures by incorporating some safety retainers that fit into the grooves made in the vertical structural elements and in the extension of the tables, shelf units or modular structures, at the same time forming tables, shelf units or modular structure that is strong, with fast and simple assembly that allows simple dismantling, as many times as is necessary, with a high aesthetic appearance, by not having any welding or auxiliary bolting for the fixing, the safety retainers being used for support, both for the upper board of the table and equally for the arrangement of the flat support surfaces at intermediate heights, connected to the intermediate longitudinal members of the tables, shelf units or modular structures.

The tables, shelf units or modular structures with hollow box section profiles assembled by connecting with the safety retainers object of the invention is based on some upper longitudinal members made up of hollow box section profiles that have the upper faces of their ends mitre cut in a perpendicular manner to the generating function of the profile to the height of the internal face of the mitre cut, there being a longitudinal groove made along a half of the area of the internal face and a transversal groove that affects half of the profile edge on the external face from the inner face connecting with the perpendicular cut of said internal face.

In such a way that two upper longitudinal members are fitted to the upper ends of each one of the four feet of same, made up of hollow box section profiles in which the dimension of their sides corresponds to the width of the upper longitudinal members, the internal faces being reduced, depending on the edge of the upper extension faces, for the purpose of these being flush after assembly, the legs having the feet with transversal grooves from their upper ends of their inner faces connected to those on the external faces, having a length that will allow for the fitting in of the transversal grooves of the upper longitudinal members, which likewise have a longitudinal groove made on half of their internal faces, likewise on the internal edge of the legs, connected to the transversal groove of the upper longitudinal members once assembled, provided to house a safety retainer that fixes the upper longitudinal members to the leg, preventing it from coming undone. There are some expansion feet with the retainer having a flat arrangement and fitted in the area provided for the housing of the upper longitudinal members and the leg in order to prevent their removal in an accidental manner, and thus the external area of said retainer having a specific surface that allows the support of a flat surface, for example glass, which carries out the task of being a table top.

At an intermediate height of the table, there are some intermediate longitudinal members fitted, made up of hollow box section profiles and having an equal width to the leg, which have their ends cut in a perpendicular way to the generatory face of the profile itself, there being a longitudinal groove made on the inner surface, just like that of the upper longitudinal members and a transversal groove on the external face, which from the inner face is made half way, extending the profile on said external face, in the area of said groove, in a protrusion that equally is equally made half way up, which is intended to be housed in a transversal groove that the leg incorporates half way up one of its inner faces, connected to the edges of the external faces, the leg also having a longitudinal groove that connects half way up its inner faces, just the same as to the inner edge of the leg, connected to the longitudinal groove of the intermediate longitudinal members once assembled; intended to house a safety retainer the same as that referred to previously which fixes the intermediate longitudinal members to the leg.

In one alternative embodiment of the above stated table the possibility is considered that the retainer is made with a specific edge, incorporating a through hole that connects to its symmetry axis, so that in the inner area, between the expansion feet, there is a tronco-conical washer arrangement fixed to a stud that is activated from the outside of the retainer, expanding the feet against the inner faces of the leg thus ensuring the fixing of all of the elements of the node.

In another embodiment of the retainer, a retainer is considered as in the above description that has some side protrusions on its outer side aimed at being housed in respective grooves made separately close to the longitudinal grooves of the inner faces of the upper and intermediate longitudinal members, in this way ensuring greater strength for the complete assembly.

Finally another embodiment has been considered with the possibility that the retainer has a greater width, for fittings that require increased rigidity, connected to the edge of the longitudinal members, incorporating as a variation on the previous embodiment some separate grooves close to the longitudinal grooves of the inner faces of the upper and intermediate longitudinal members, the retainer having an internal element, fixed to a stud that fixes the retainer depending on its action from the outer are onto same.

### DESCRIPTION OF THE DRAWINGS

In order to complete the description that is being made and for the purpose of giving a greater understanding of the characteristics of the invention, in accordance with the preferred embodiment carried out this present descriptive memorandum is accompanied by a set of drawings, which is illustrative but not limiting, where the most significant details are as follows.

Figure 1 shows an exploded perspective view of the elements that are included in a table leg object of the invention.

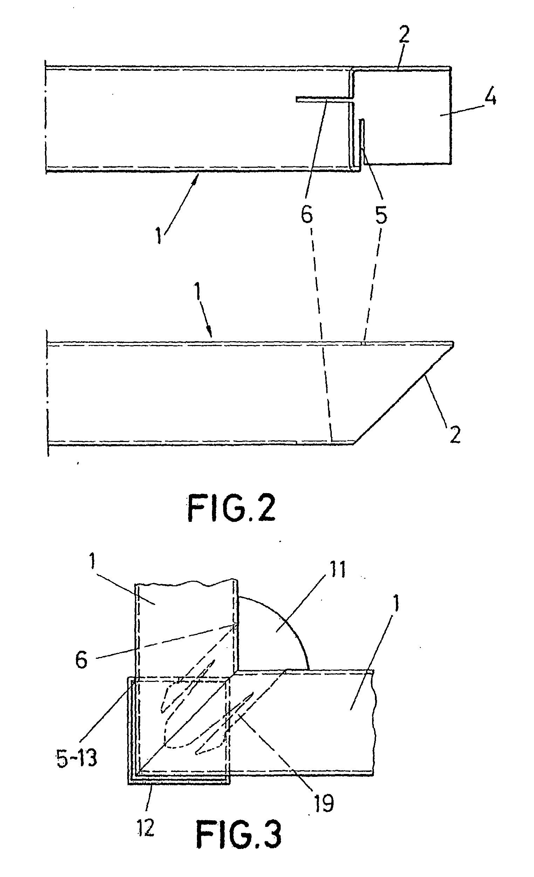

Figure 2 shows a plan and elevation view of one of the upper longitudinal members of the table.

Figure 3 shows a plan view of a corner of the structure.

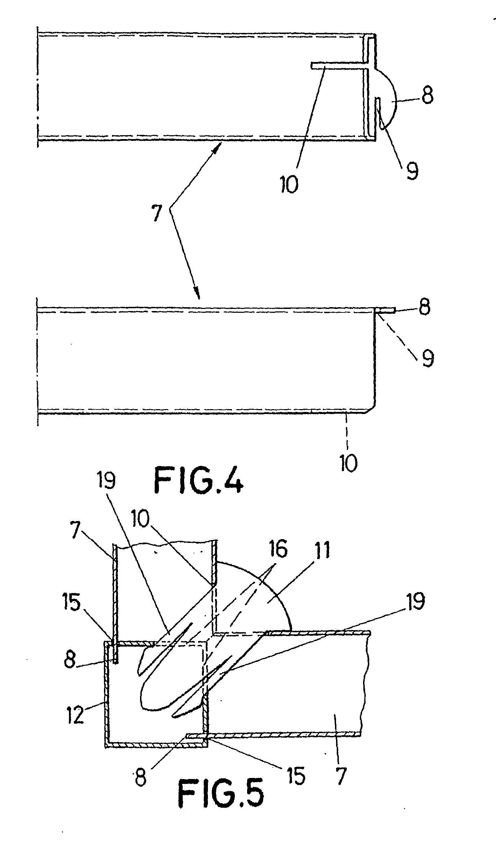

Figure 4 shows a plan and elevation view of one of the intermediate longitudinal members of the table.

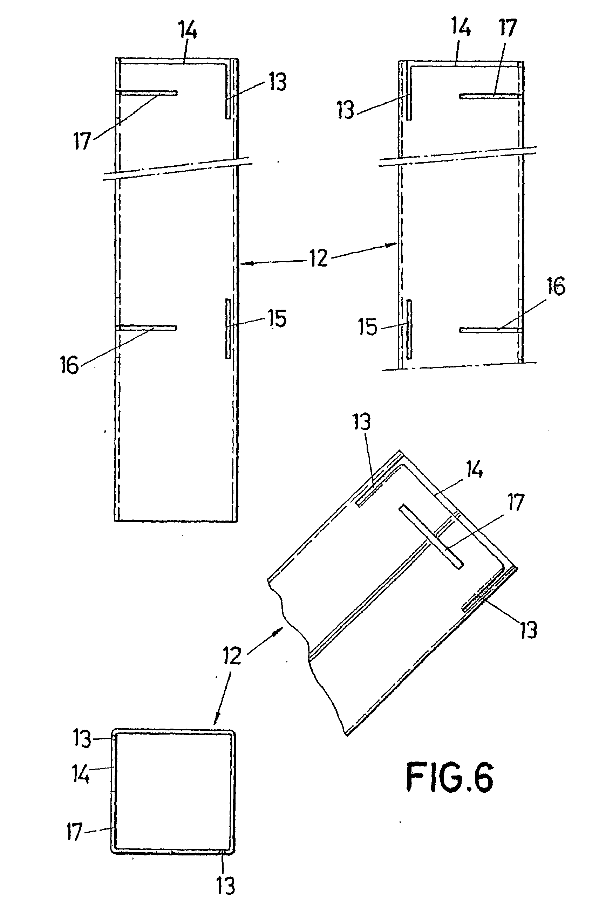

Figure 5 shows a section view of the arrangement of the intermediate longitudinal members to the table leg in the assembly position.

Figure 6 shows a plan and elevation view and one of one of the orthogonal profiles and at 45° of one of the table legs object of the invention.

Figure 7 shows a section view of one variation of the safety retainer, in the assembly position, of one of the intermediate longitudinal members and the leg.

Figure 8 shows a section view, like the one in the previous figure, of another variation of the safety retainer, equally in the assembly position of the intermediate longitudinal members and the leg.

Figure 9 shows a section view, in accordance with the two previous figures, of a last variation of the safety retainer equally in the assembly position of the intermediate longitudinal members and the leg.

Figure 10 shows an elevation view of the last variation of the safety retainer in a first position of rest.

Figure 11 shows an elevation view of the variation of the previous figure in its assembled position.

### DESCRIPTION OF A PREFERRED EMBODIMENT

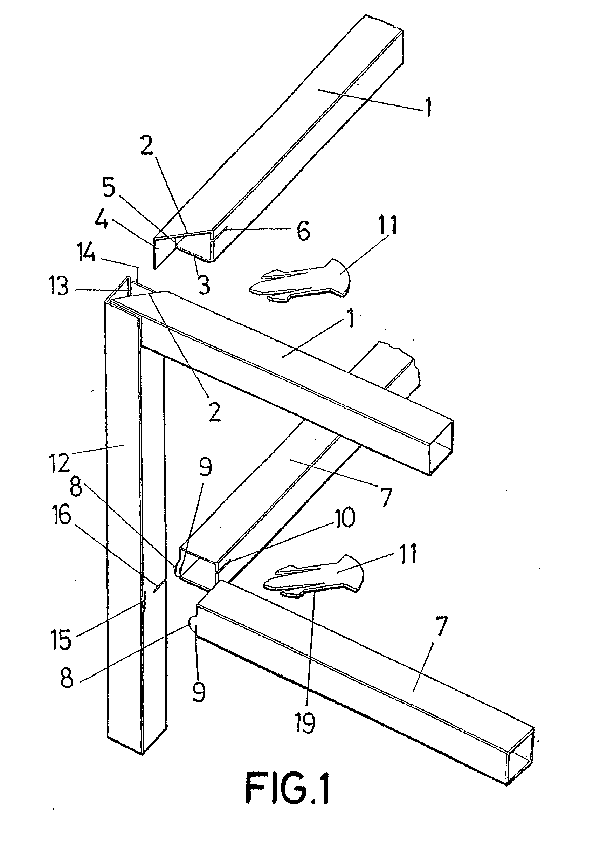

In view of the figures commented on, the table, tables, shelf units or modular structures with hollow box section profiles assembled with the safety retainers object of the invention are made up of some upper longitudinal members (1), made up of hollow box section profiles, that have the upper faces (2) of their ends cut with mitres, the lower faces (3) of the ends cut in a perpendicular manner to the generating function of the profile at the level of inner face of the mitre cut, having a longitudinal grove (6) in the half way area of the inner face and a transversal groove (5) that is made half way along the profile edge, on the outer face (4), from the lower face (3) connected to the perpendicular cut of said lower face (3), in the manner which can be appreciated in figure 1.

In this way two upper longitudinal members (1) are fitted into the upper end of each one of the four feet (12) of the table, made from a hollow square section in which the dimensions of the sides corresponds to the width of the upper longitudinal members (1), the inner faces being reduced (14), in accordance with the edge of the faces of the upper longitudinal members (1), for the purpose of these being flush after their assembly, the feet (12) having respective transversal grooves (13) from the upper ends on their inner faces connecting with the edges of the external faces, with a length that allows them to fit into transversal grooves (5) of the upper longitudinal members (1), likewise having a longitudinal groove (17) that is taken in the middle area of the inner faces, likewise the inner edge of the leg, connecting with transversal groove (6) of the upper longitudinal members (1) once assembled, aimed at housing a safety retainer (11) that fixes the upper longitudinal members (1) to the leg (12), preventing it from uncoupling, the retainer (11) having flat arrangement that goes to the area intended for the housing in the upper longitudinal members (1) and some extension feet (19) in the leg (12) that prevent the unintentional removal, thus the external area of said retainer (11) having a specific surface for the support of a flat surface.

At an intermediate area on the height of the table there are some intermediary longitudinal members (7), made up of hollow profiles with a square section and with the same width as the leg (12), which have the ends cut in a perpendicular manner to the generation of the profile itself, having a longitudinal groove (10) on the inner face, just like the upper longitudinal members (1), and a transversal groove (9) on the outer face, which from the lower face connects half way up, extending the profile on said outer face, in the area of said groove (9), with a protrusion (8) that connects half way up as well, which is intended to be housed in a transversal groove (15) that the leg (12) has at its mid point on its inner faces, there being a longitudinal groove (16) of the leg (12) that connects at the mid point of its inner faces connecting with the edges of the outer faces, likewise with the inner edge of the leg (12), connecting to the longitudinal groove (10) of the intermediate longitudinal members (7) once assembled, intended to house a safety retainer (11) as referred to above.

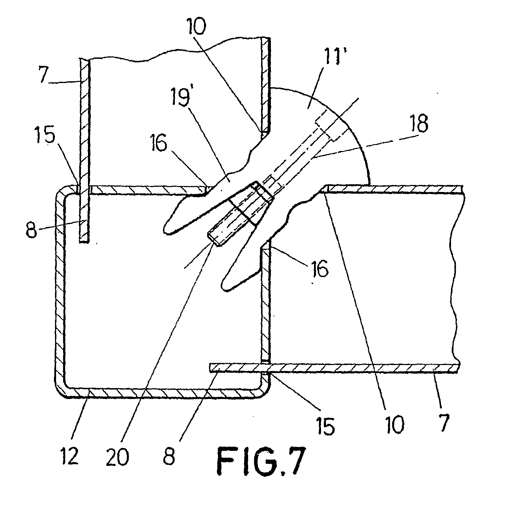

In a variation of the previously described table, as and how can be seen in figure 7, the possibility of the safety retainer materialising in a piece (11') that has a specific feathered edge, being fitted with a through hole (18) that connects with its axis of symmetry, in such a way that on its inner area, between the expansion feet (19'), being fitted with a washer with a tronco-conical shape joined to a stud (20) that is activated from the exterior area of the retainer (11'), expanding the feet (19') against the inner faces of the leg (12) thus ensuring the fixing of all of the elements of the node.

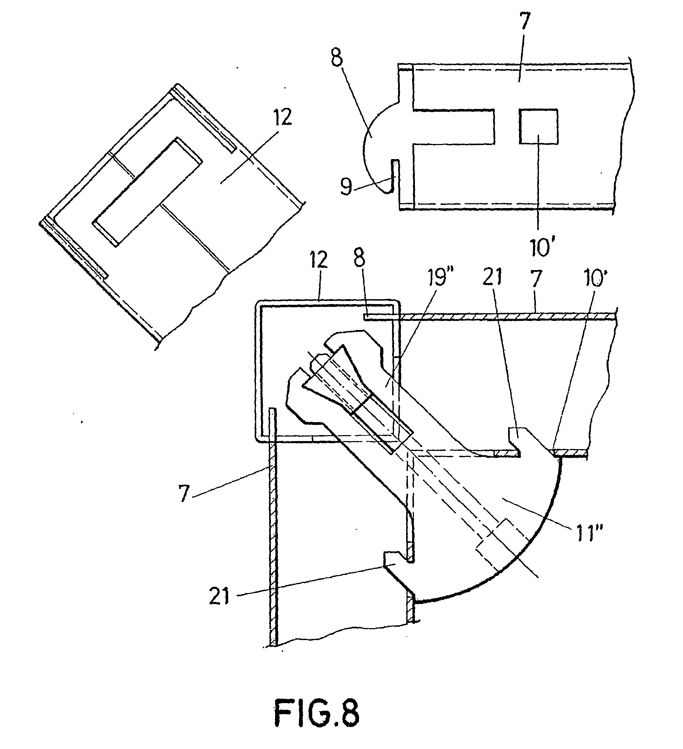

In another variation of the retainer, shown in figure 8, a retainer (11") has been considered that is similar to that described previously, which incorporates some lateral protrusions (21) on the outer area intended to be housed in respective grooves (10') made separately close to the longitudinal grooves (10) of the inner faces of the longitudinal members (1) and (7), in this way ensuring greater strength for the assembly, by means of the expansion of the feet (19").

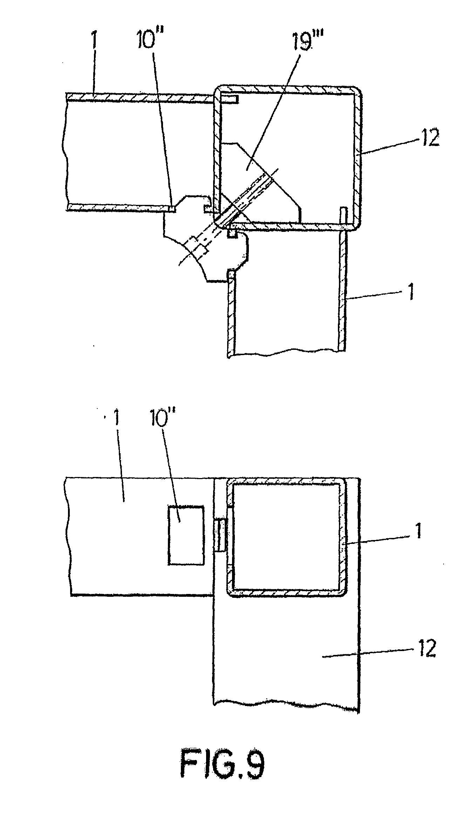

Also considered as a variation is the possibility of the retainer (11"), as and how shown in figure 9, having a considerable width, for fixings that require higher level of rigidity, some separate grooves (10'') close to the longitudinal grooves (10) of the inner faces of the longitudinal members (1) and (7) connected with the edge of the longitudinal members (1) and (7), the retainer (11") having an inner element, fixed to the stud (20), that fixes the retainer (11") in accordance with the way it acts from the outer area onto itself.

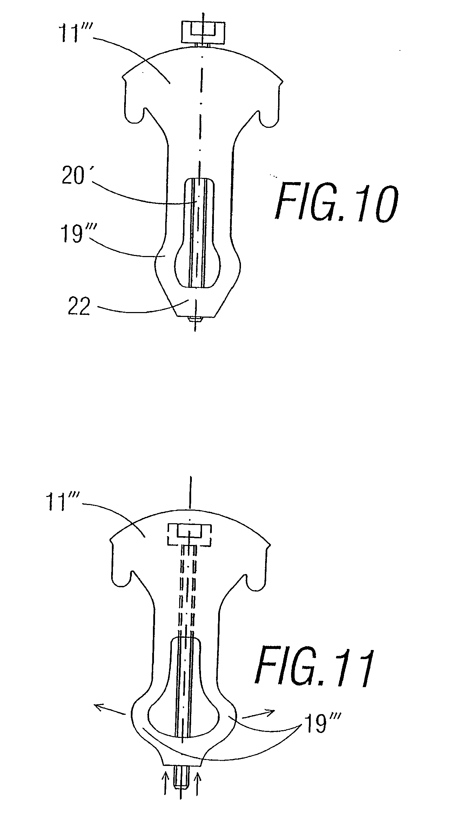

On the other hand figures 10 and 11 show a final embodiment of a retainer (11''') for the coupling of the hollow profiles in which the feet (19''') are advantageously joined to each other at the bottom by means of a bridging section (22) unlike the previously described retainers. The working of said piece is practically the same as in the previous cases, in such a way that when the stud (20') is screwed the bridging section (22) ascends by the movement of the screwing of the stud (20') itself so that the feet (19''') are expanded laterally in the direction shown by the arrows (see figure 11), thus obtaining the fixing of all of the elements of the node. Advantageously, said piece (11''') has the advantage over that shown in figure 8 because it is a single piece and does not require any additional internal components to achieve the expansion or retraction of the feet.

## Claims

1. A table, shelf or modular structure made from hollow square sections assembled by coupling with safety retainers, the purpose of which is to form a resistant table, shelf or modular structure, with a markedly aesthetic appearance, fast and simple assembly and dismantling, in addition to having a low cost, is **characterised in that** it is made from some upper longitudinal members (1) made from hollow square section profiles, which have their upper faces of the ends (2) mitre cut the lower faces (3) of the cut ends in a perpendicular fashion to the generation of the profile at the point of the inner face of the mitre cut, having a transversal groove (6) in the middle area of the internal face and a longitudinal groove (5) that meets half way along the edge of the profile, on the outer face (4), from the lower face (3), connecting with perpendicular cut of said lower face (3), coupling two upper longitudinal members (1) at the upper end of each one of the four legs (12) of the table, made up by a hollow square section profile in which the dimension of its sides corresponds to that of the width of the upper longitudinal members (1), both feet (12) having transversal grooves (13) from their upper ends on their inner faces connecting to the edges of the outer faces, with a length that is enough to allow them to fit into the transversal grooves (5) of the upper longitudinal members (1), likewise having a longitudinal groove (17) that meets the mid area of its inner faces, likewise to the inner edge of the leg, connecting with the transversal groove (6) of the upper longitudinal members
(1) once assembled, into which the safety retainer (11) is housed that fixes the upper longitudinal members (1) to the leg (12), the retainer (11) with a flat construction that has some expansion feet (19) in the area intended for the housing of the upper longitudinal members (1) and the leg (12) that prevent the unintentional extraction, the external area of said retainer (11) having a specific flat support surface.

2. A table, shelf or modular structure made from hollow square sections assembled by coupling with safety retainers according to claim 1, **characterised in that** there are some intermediary longitudinal members (7) at an intermediate height of the table made up from hollow square section profiles and with an equal width to the leg (12) which have their ends cut in a perpendicular fashion to the generation of the profile itself, there being a longitudinal groove (10) on the inner face, just like that of the upper longitudinal members (1) and a transversal groove (9) on the outer face which meets the inner face half way up, extending the profile of said external face, in the area of said groove (9), with a protrusion (8) that equally meets half way up, and which is housed in a transversal groove (15) that the leg (12) has half way up its inner faces, connecting with the edges of the external faces, the leg (12) equally having a longitudinal groove (16) that meets half way up the inner faces, likewise the inner face of the leg (12) connecting with the longitudinal groove (10) of the intermediary longitudinal members (7) once assembled, intended to house the safety retainer (11).

3. A table, shelf or modular structure made from hollow square sections assembled by coupling with safety retainers according to any of the above claims, **characterised in that** as a replacement for the safety retainer (11) there is a retainer (11') that has a specific edge, being fitted with a through hole (18) that meets at its symmetry axis, in such a way that at the inner area, between the expansion feet (19') there is a tronco-conical washer joined to a stud (20) that is activated from the upper area of the retainer (11'), expanding the pieces (19') against the inner faces of the leg (12).

4. A table, shelf or modular structure made from hollow square sections assembled by coupling with safety retainers according to claims 1 and 2, **characterised in that** the safety retainer (11) has a retainer (11") that has some lateral protrusions (21) on its outer surface intended to be housed in respective grooves (10') made in a separate manner close to the longitudinal grooves (10) of the inner faces of the longitudinal members (1) and (7), by means of the expansion of the feet (19''').

5. A table, shelf or modular structure made from hollow square sections assembled by coupling with safety retainers according to claim 4, **characterised in that** the safety retainer (11'') has an edge of the two longitudinal members (1) and (7), these incorporating some separate grooves (10") close to the longitudinal grooves (10) of the inner faces of the longitudinal members (1) and (7), the retainer (11") having an inner element, joined to the stud (20), that fixes the retainer (11") on acting from the external area on same.
